(19) Europäisches Patentamt
European Patent Office
Office européen des brevets

(11) Publication number: **0 048 957**
**B1**

(12) **EUROPEAN PATENT SPECIFICATION**

(45) Date of publication of patent specification: **15.08.84**

(51) Int. Cl.³: **D 01 F 9/10**, C 01 B 31/36, C 08 L 83/14, C 08 G 77/58

(21) Application number: **81107595.1**

(22) Date of filing: **23.09.81**

(54) **Continuous inorganic fibers and process for production thereof.**

(30) Priority: **24.09.80 JP 131468/80**

(43) Date of publication of application:
**07.04.82 Bulletin 82/14**

(45) Publication of the grant of the patent:
**15.08.84 Bulletin 84/33**

(84) Designated Contracting States:
**DE FR GB**

(56) References cited:
**EP - A - 0 021 844**
**FR - A - 2 345 477**
**GB - A - 2 009 196**

(73) Proprietor: **Ube Industries, Ltd.**
**12-32, Nishihonmachi 1-chome**
**Ube-shi, Yamaguchi-ken (JP)**

(72) Inventor: **Yajima, Seishi Tohoku daigaku shukusha 4-2**
**843, Ohnuki machi Oharai-machi**
**Higashiibaraki-gun Ibaraki-ken (JP)**

(74) Representative: **Bühling, Gerhard, Dipl.-Chem. et al,**
**Patentanwaltsbüro Tiedtke-Bühling-Kinne Grupe-Pellmann Bavariaring 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 048 957 B1**

## Description

This invention relates to novel continuous inorganic fibers composed substantially of Si, V and C (which may further contain O as an impurity), and a process for production thereof.

Background of the Invention

Polycarbosilane containing silicon and carbon as main skeletal components is a known polymer, and is disclosed, for example, in U.S. Patent No. 4,052,430 to Yajima et al. The technique of obtaining continuous silicon carbide fibers having good mechanical and thermal properties by spinning the polycarbosilane, rendering the resulting fibers infusible and then firing them is disclosed in U.S. Patent No. 4,100,233 to Yajima et al. Furthermore, U.S. Patent No. 4,220,600 discloses a process for producing polycarbosilane partly containing siloxane bonds, and a technique of obtaining continuous silicon carbide fibers from this type of polycarbosilane.

On the other hand, U.S. Patent 4 358 576 filed on April 15, 1981 and published on November 9, 1982 corresponding to Japanese Patent Application No. 49581/80 filed April 17, 1980 which was laid open for public inspection November 17, 1981 as Japanese laid-open Patent Application No. 147,827/81 discloses a novel organometallic polymer whose main-chain skeleton consists of Si—$CH_2$ and V—O bonds and which partly contains a vanadiosiloxane bond V—O—Si, and a process for production thereof. This organometallic polymer is referred to in the present application as a modified polycarbosilane.

It has been found that the modified polycarbosilane has better heat resistance and oxidation resistance and a higher residual ratio on firing than conventional polycarbosilanes, as shown in the following Table 1.

TABLE 1

| Item | Conventional polycarbosilane (synthesized under pressure) disclosed in U.S. Pat. 4,052,430 | Conventional polycarbosilane partly containing a siloxane bond disclosed in U.S. Pat. 4,220,600 | Modified polycarbosilane used in the invention |
|---|---|---|---|
| Number average molecular weight | 1800 | 1720 | 1900 |
| Decomposition temperature (°C) | 310 | 350 | 370 |
| Ratio of increase by oxidation after maintaining in the air at 200°C for 1 hour | 9.0 | 6.5 | 6.0 |
| Residual ratio on firing (maintained in an argon gas at 1500°C for 1 hour) | 49.8 | 73.8 | 75.0 |

The present inventor has now found that novel continuous inorganic fibers having superior properties can be obtained by spinning the aforesaid modified polycarbosilane, rendering the resulting fibers infusible, and then firing them.

Summary of the Invention

According to this invention, there is provided a process for producing novel continuous inorganic fibers, which comprises a first step of forming a modified polycarbosilane by mixing a polysilane of the formula

$$-\!\!\left(\overset{\displaystyle R_1}{\underset{\displaystyle R_2}{\overset{|}{\underset{|}{Si}}}}\right)_{\!n}\!\!-$$

wherein $R_1$ and $R_2$ are identical or different and each represents a group selected from the class consisting of hydrogen, methyl, ethyl and phenyl provided that $R_1$ and $R_2$ are not hydrogen at the same time, and n is a number represented by $3 \leqq n < 500$, with polyvanadiosiloxane or a vanadium complex having oxygen as a coordinating atom adjacent to the vanadium atom and reacting the mixture at 250 to 500°C in an atmosphere inert to the reaction, said modified polycarbosilane being an organometallic polymer of which main-chain skeleton consists mainly of an Si—$CH_2$ bond and a V—O bond and which partly contains a vanadiosiloxane bond V—O—Si, the ratio of the silicon atoms to the vanadium atoms being in the range of from 3:1 to 1000:1, the silicon atom having directly bonded thereto a side-chain group selected from the class consisting of hydrogen, methyl, ethyl and phenyl, the vanadium atom being bonded to the silicon atom through an oxygen atom, and said polymer being substantially free from a side-chain organic group directly bonded to the vanadium atom; a second step of preparing a spinning dope of the modified polycarbosilane and spinning it; a third step of rendering the resulting fibers infusible under tension or in the absence of tension; and a fourth step of firing the infusible fibers at a temperature of 800 to 1,800°C in vacuum or in an atmosphere of an inert gas.

The present invention also provides novel continuous inorganic fibers consisting substantially of Si, V and C (which may contain O as an impurity), said fibers being composed substantially of

1) an amorphous ternary carbide of the formula $Si_{l-x}V_xC_y$ in which $0.25 \geqq x \geqq 0.001$ and $1.50 \geqq y \geqq 1.00$, or

2) a crystal aggregate consisting of $\beta$-SiC substantially as a main component and vanadium carbide and graphite, the proportions of vanadium and graphite not exceeding 0.25 mole and 0.50 mole respectively per mole of $\beta$-SiC, these crystalline compounds being in the form of ultrafine particles having a crystal grain size of not more than 50 nm (500 Å) being entangled to form an intimate composite, or

3) a mixture of the amorphous ternary carbide 1) and the aggregate 2).

## Brief Description of the Drawings

Figure 1 is a view showing one example of apparatus used to synthesize the modified polycarbosilane used as a material in the process of this invention;

Figure 2 shows a comparison of the thermogravimetric analysis curve of the modified polycarbosilane (A) used in this invention with that of a polycarbosilane produced by a conventional known method;

Figure 3 is an X-ray powder diffraction pattern of the continuous inorganic fibers of the invention (having a vanadium content of 8% by weight after firing);

Figure 4 is an X-ray powder diffraction pattern of other continuous inorganic fibers of the invention (having a vanadium content of 0.05% by weight after firing); and

Figure 5 is a photograph showing the form of the continuous inorganic fibers of the invention.

## Detailed Description of the Invention

The process of the invention will first be described.

The modified polycarbosilane used in the invention and its production are described in detail in U.S. Patent 4358578 mentioned hereinabove. Briefly stated, the modified polycarbosilane is an organometallic polymer whose main-chain skeleton consists mainly of an Si-$CH_2$ bond and a V—O bond and which partly contains a vanadiosiloxane bond V—O—Si. The ratio of the silicon atoms to the vanadium atoms is in the range of from 3:1 to 1000:1. The side-chain group directly bonded to the silicon atom is a group selected from the class consisting of hydrogen, methyl, ethyl and phenyl, and the vanadium atom is bonded to the silicon atom through an oxygen atom, and a side-chain organic group directly bonded to the vanadium atom is substantially absent.

The first step of the process of the invention consists in the synthesis of the modified polycarbosilane. In this step, a polysilane of the formula

$$-\!\!\left(\overset{\displaystyle R_1}{\underset{\displaystyle R_2}{\overset{|}{\underset{|}{Si}}}}\right)_{\!n}\!\!-$$

wherein $R_1$ and $R_2$ are identical or different and each represents a group selected from the class

consisting of hydrogen, methyl, ethyl and phenyl provided that $R_1$ and $R_2$ are not hydrogen at the same time, and n is a number represented by $3 \leqq n < 500$, is mixed with polyvanadiosiloxane or a vanadium complex having oxygen as a coordinating atom adjoining the vanadium atom, and the mixture is reacted at a temperature of 250 to 500°C in an atmosphere inert to the reaction.

The advantage of the first step in the process of the invention is that no special device is required for heat-polymerizing the aforesaid mixture. For example, the simple device shown in Figure 1 can be used. In Figure 1, c represents a heating furnace such as an ordinary electric furnace; e represents a refluxing device made of hard glass which uses cooling water; b, a reaction vessel made of hard glass, quartz, stainless steel, etc.; f, a flow inlet for a gas inert to the reaction; and g, a flow outlet for the inert gas.

By using the simple heating furnace, reactor, refluxing device, etc., the modified polycarbosilane of excellent quality can be synthesized in the first step of the process of the invention. It does not require special devices, such as a pressurized vessel or a flowing device permitting recycling, as do conventional processes for producing polycarbosilanes.

In the first step, the polymerization reaction under heat must be carried out in an atmosphere of a gas inert to the reaction. If the polymerization reaction is carried out in an oxidizing atmosphere such as air, the starting polysilane undergoes oxidation, and the intended reaction does not proceed sufficiently. Nitrogen, argon, and hydrogen are especially suitable as the inert gas used in the reaction. Preferably, the polymerization reaction is generally carried out at atmospheric pressure or at pressures near it. If the reaction is carried out in vacuum or under greatly reduced pressures, the resulting low-molecular components distill out of the system to cause a drastic decrease in yield. In order to practice the first step of the process of the invention, it is preferred to perform the polymerization reaction while sending the inert gas as a stream to the reaction zone. By so doing, the pressure in the reactor is maintained substantially at atmospheric pressure, whereby a temperature rise or a pressure rise owing to a gas such as methane released during the reaction can be prevented.

The heating temperature used in the first step is lower than in the prior art, and is usually 250 to 500°C, preferably 300 to 450°C. This is another advantage of the process of this invention. If the reaction temperature is below 250°C, the polymerization does not proceed as desired, and if the temperature is more than 500°C, the resulting modified polycarbosilane gradually becomes inorganic by dissipation of side-chain components. Thus, temperatures outside the specified range are undesirable.

Another important advantage of the invention is that the heat polymerization in the first step of the process of the invention is completed usually within a relatively short period of not more than 10 hours. Even when the heating is continued for more than 10 hours, no substantial improvement is noted in the resulting polycarbosilane.

The superior properties of the modified polycarbosilane obtained by the polymerization reaction described above are summarized in Table 1 given hereinabove.

Figure 2 shows the thermogravimetric analysis curve of the modified polycarbosilane used in this invention together with that of the conventional polycarbosilane disclosed in U.S. Patent No. 4,220,600. The measurement is carried out in $N_2$ at a temperature raising rate of 5°C/min. In the thermogravimetric curve of the modified polycarbosilane (A) used in the invention in Figure 2, two plateau portions are noted at 300 to 600°C. It is presumed that during this time, high crosslinking of the modified polycarbosilane proceeds stepwise through vanadium contained therein, and therefore, the residual ratio on firing becomes very high.

The results of chemical analysis show that the modified polycarbosilane contains 30 to 60% by weight of Si, 20 to 60% by weight of C, 0.5 to 5% by weight of O, 5 to 10% by weight of H and 0.01 to 15% by weight of V.

The modified polycarbosilane has been found to have a molecular weight of 500 to 100,000 as a result of measurement of its molecular weight distribution by G.P.C. (gel-permeation chromatography) and a number average molecular weight, determined by the vapor pressure method, of 1400 to 2200.

The modified polycarbosilane used in this invention of which main-chain skeleton consists of an Si—$CH_2$ bond and a V—O bond is a thermoplastic substance which is soluble in organic solvents such as n-hexane, xylene, tetrahydrofuran as is the case with conventional polycarbosilanes, and melts at 60 to 300°C.

In the second step of the process of this invention, the polycarbosilane obtained in the first step is melted to form a spinning dope. The spinning dope is filtered to remove materials detrimental to spinning, such as microgels and impurities, and then spun by an ordinary spinning apparatus for synthetic fibers. The temperature of the spinning dope being spun differs depending upon the softening temperature of the starting polycarbosilane but is advantageously in the range of 50 to 380°C. Fibers of smaller diameter can be obtained in the aforesaid spinning apparatus by mounting a spinning cylinder, filling at least one gas selected from air, inert gases, hot air, hot inert gases, steam and ammonia gas in the inside of the spinning cylinder, and increasing the speed of wind-up. The spinning speed in the aforesaid melt spinning process varies depending upon the average molecular weight, molecular weight distribution and molecular structure of the starting modified polycarbosilane. Good

results can be obtained when the spinning speed is in the range of 50 to 5000 meters/min.

In the second step of the process of this invention, fine fibers can also be obtained at an increased wind-up speed by dissolving the modified polycarbosilane obtained in the first step in a solvent capable of dissolving the modified polycarbosilane, such as benzene, toluene, xylene, ethylbenzene, styrene, cumene, pentane, hexane, octane, cyclopentadiene, cyclohexane, cyclohexene, methylene chloride, chloroform, carbon tetrachloride, 1,1-dichloroethane, 1,2-dichloroethane, methylchloroform, 1,1,2-trichloroethane, hexachloroethane, chlorobenzene, dichlorobenzene, ethyl ether, dioxane, tetrahydrofuran, methyl acetate, ethyl acetate, acetonitrile or carbon disulfide to prepare a spinning solution, filtering the spinning solution to remove substances detrimental to spinning such as macrogels and impurities, and spinning the solution in an ordinary spinning apparatus for synthetic fibers by the dry-spinning method.

In the above spinning process, a spinning cylinder may be mounted in the spinning apparatus as required, and solidification of the resulting fibers can be controlled by providing within the cylinder an atmosphere consisting of a mixture of a saturated vapor of at least one of the aforesaid solvents and at least one gas selected from air and inert gases, or an atmosphere of air, an inert gas, hot air, a hot inert gas, steam, ammonia gas, a hydrocarbon gas, or an organosilicon compound gas.

In the conventional process for producing silicon carbide fibers using a polycarbosilane obtained by thermally decomposing a polysilane in a pressurized vessel or a flow device adapted for permitting recycling as a starting material, the polycarbosilane obtained in the first step is usually viscous at room temperature. Hence, before preparing a spinning dope from the resulting polycarbosilane, low-molecular-weight compounds must be removed from it. When a pressurized vessel is used in the conventional process, polycarbosilane which is solid at room temperature can be obtained by suitably selecting the polymerization conditions in the first step, such as the polymerization temperature and time. This, however, has the defect that polymerization temperature should be adjusted to at least 500°C, and the resulting solid polycarbosilane cannot be spun because it begins to decompose before it is melted and there is no suitable solvent which can dissolve it.

In contrast, the modified polycarbosilane obtained in the first step of the process of this invention is solid at room temperature. The resulting solid modified polycarbosilane can be easily formed into a spinning dope and can be spun. This offers another advantage of the invention because the step of removing low-molecular-weight compounds from the polycarbosilane can be omitted.

In the third step of the process of this invention, the spun fibers are rendered infusible by heating them in an oxidizing atmosphere at a temperature of 50 to 400°C for a period of several minutes to 30 hours under tension or in the absence of tension. The purpose of this low-temperature heating is to form a thin oxide coating on the surfaces of the spun fibers so as to avoid melting of the fibers in the subsequent firing step. By the formation of the protective oxide coating, the fibers are not melted in the subsequent firing step, and the adjoining fibers do not adhere to each other even when they contact each other.

The low-temperature heating is performed in an oxidizing atmosphere consisting of at least one oxidizing gas selected from air, ozone, oxygen, chlorine gas and bromine gas. When the low temperature heating is carried out at a temperature lower than 50°C in the above gaseous atmosphere, an oxide coating cannot be formed on the spun fibers. At a temperature higher than 400°C, oxidation proceeds too much. Accordingly, good results are obtained when the temperature is in the range of 50 to 400°C. The heating time is related to the heating temperature, and is suitably from several minutes to 30 hours.

An aqueous solution of $KMnO_4$, $K_2Cr_2O_7$, $H_2O_2$ or another inorganic peroxide can also be used to provide the low-temperature heating atmosphere. In this case, the heating temperature is preferably from room temperature to 90°C, and the heating time is preferably from 0.5 to 5 hours.

The modified polycarbosilane obtained in the first step of the process of this invention has a varying molecular weight distribution depending upon the synthesizing conditions and depending upon the content of low-molecular-weight compounds, its softening temperature may fall below about 50°C. In such a case, the content of the low-molecular-weight compounds can be reduced by methods described hereinbelow thereby adjusting the softening temperature of the modified polycarbosilane to at least 50°C. If the modified polycarbosilane having a softening temperature of less than 50°C is spun into fibers, the resulting fibres may lose their shape when they are heated at 50 to 400°C in an oxidizing atmosphere in order to render them infusible. Specifically, when the modified polycarbosilane obtained in the first step has a softening point of less than about 50°C, an additional step of removing low-molecular-weight compounds from the modified polycarbosilane obtained in the first step can be provided between the first and second steps. Typical methods for performing this additional step include a method which comprises extracting low-molecular-weight compounds from the polycarbosilane obtained in the first step by using an extracting solvent, for example an alcohol such as methanol or ethanol, or acetone to adjust the softening temperature of the modified polycarbosilane to at least 50°C; and a method which comprises heating the modified polycarbosilane under reduced pressure or in an inert gaseous atmosphere to at a temperature of not more than 500°C to remove the low-molecular-weight compounds by distillation and thus to adjust the softening temperature of the modified polycarbosilane to at least 50°C. In this additional step, distillation in an oxidizing atmosphere containing air, oxygen gas, etc. is

undesirable because it induces oxidation, decomposition or gelation of the modified polycarbosilane. Furthermore, since decomposition of the modified polycarbosilane becomes vigorous at a heating temperature of more than 500°C, the heating temperature should be adjusted to not more than 500°C.

In the third step of the process of this invention, the fibers can be rendered infusible also by subjecting them to $\gamma$-ray irradiation or electron beam irradiation in an oxidizing atmosphere or a non-oxidizing atmosphere under tension or in the absence of tension, if required while heating them at low temperature. Irradiation of $\gamma$-rays or electron beams polymerizes the modified polycarbosilane constituting the spun fibers further. This prevents the spun fibers from decomposing instead of softening and from melting in the subsequent firing step. The above treatment with $\gamma$-rays or electron beams can be performed in a non-oxidizing atmosphere such as an inert gas or in vacuum, and the suitable dose of these $\gamma$-rays or electron beams is $10^6$ to $10^{10}\gamma$. It can be performed at room temperature. This treatment can also be carried out in an oxidizing gaseous atmosphere of at least one oxidizing gas selected from air, ozone, oxygen, chlorine gas and bromine gas. If further required, the above treatment can be performed while heating the fibers at 50 to 200°C. This results in formation of a thin oxide coating on the surface of the spun fibers and makes it possible to produce infusible fibers within a shorter period of time. When this treatment with $\gamma$-rays or electron beams is carried out, the modified polycarbosilane obtained in the first step should be solid at room temperature. If it is viscous, it must be extracted with a solvent or distilled to remove low-molecular-weight compounds from it and to render it solid at room temperature.

When the above treatment is carried out in the absence of tension, the spun fibers will shrink to assume a wavy form, but this can sometimes be corrected in the subsequent firing step, and therefore tension is not always required. When it is to be carried out under tension, the tension may be of such a magnitude as to at least prevent the fibers from shrinking into a wavy form during the treatment of rendering them infusible. Good results can be obtained when the tension is in the range of 1 to 500 $g/mm^2$.

When a tension of less than 1 $g/mm^2$ is exerted, the fibers cannot be maintained taut. If, on the other hand, a tension higher than 500 $g/mm^2$ is exerted, the fibers may be broken. The suitable tension is, therefore, 1 to 500 $g/mm^2$.

The infusible fibers obtained by the third step are advantageous for obtaining continuous inorganic fibers because they have higher tensile strength and elongation than fibers obtained by spinning a conventional polycarbosilane and rendering the resulting fibers infusible and are easy to handle.

In the fourth step of the process of this invention, the infusible fibers are fired at a temperature in the range of 800 to 1800°C. The firing is carried out in vacuum or in an atmosphere of an inert gas at a temperature of 800 to 1800°C under tension or in the absence of tension. By the firing step, the modified polycarbosilane forming the fibers releases easily volatile components as a result of heat polycondensation and thermal decomposition.

Dissipation of the easily volatile components is most vigorous at a temperature of 500 to 700°C. As a result of dissipation of the easily volatile components, the fibers are shrunken and bent. Application of a tension during heating is especially advantageous for preventing bending. The tension at this time is of such a magnitude as to at least prevent the fibers from shrinking into a wavy form during the heating. For practical purposes, good results can be obtained by exerting a tension in the range of 0.001 to 5 $kg/mm^2$. If a tension of less than 0.001 $kg/mm^2$ is applied, the fibers cannot be maintained taut. Application of a tension higher than 5 $kg/mm^2$, on the other hand, may cause breakage of the fibers. Accordingly, tensions in the range of 0.001 to 5 $kg/mm^2$ are suitable. The firing may be carried out in a multiplicity of stages having different heating conditions such as the atmosphere, temperature and time.

The fibers obtained by the above steps may contain impurities consisting of graphite, free carbon or silica especially at their surfaces, and this may cause reduction and variation of the tensile strength of the fibers. If desired, the impurities in the fibers can be removed by dipping the fibers in sulfuric acid, nitric acid, a mixture of sulfuric acid and nitric acid, hydrochloric acid, a mixture of nitric acid and hydrochloric acid, a sulfuric acid-acidified solution of potassium bichromate, a sulfuric acid-acidified solution of potassium permanganate, hydrofluoric acid, a mixture of nitric acid and hydrofluoric acid, or a mixture of hydrofluoric acid and sulfuric acid. Silica in the impurities can be dissolved out by using molten salts such as NaOH, borax, $Na_2CO_3$, $K_2CO_3$, $K_2CO_3/Na_2CO_3$, $Na_2SO_4$, $KNO_2$, NaCl, $KClO_3$, $Na_2O_2$, or $K_2CO_3/KNO_3$. Free carbon in the impurities can be dissolved out by using phosphoric acid. The use of molten salts or phosphoric acid is advantageous when it is desired to remove impurities which must be avoided depending upon end uses of the fibers of this invention.

Free carbon in the impurities can also be removed by carrying out the firing of the fibers in the fourth step at a temperature of at least 1000°C, and then heating the fibers at a temperature of preferably 800 to 1600°C in an atmosphere of at least one gas selected from the group consisting of oxygen gas, air, ozone, hydrogen gas, steam and CO gas. When the heating in an atmosphere of at least one forsaid gas is carried out at a temperature of less than 800°C, free carbon cannot be fully removed. If the temperature exceeds 1600°C, the reaction between the interior of the fibers and the atmospheric gas occurs markedly to give large coarse crystalline grains of the fibers. The firing in the above

atmosphere requires a longer time at a lower firing temperature, and a shorter period may be used at a higher firing temperature. Good results are obtained by carrying out the firing step at a low temperature for a relatively long period of time.

Application of a tension in the carbon eliminating step is not always necessary. But when the firing is carried out at a high temperature while exerting a tension in the range of 0.001 to 100 $kg/mm^2$, continuous inorganic fibers having high strength with reduced bending can be obtained. Application of a tension below 0.001 $kg/mm^2$ is ineffective, and tension of more than 100 $kg/mm^2$ do not produce any increased effect. The suitable tension is, therefore, in the range of 0.001 to 100 $kg/mm^2$.

It is presumed that the infusible fibers obtained in the third step, when subjected to heating in the fourth step, vigorously begin to become inorganic at a temperature of about 700°C, and this conversion to an inorganic state will be nearly completed at about 800°C. Accordingly, the fourth step must be carried out at a firing temperature of at least 800°C. The upper limit of the firing temperature is set at 1800°C in order to obtain excellent fiber high strength. The preferred firing temperature is 1000 to 1500°C.

The fibers of the invention produced by the process of the invention are novel continuous inorganic fibers consisting substantially of Si, V and C (which may contain O as an impurity), X-ray diffraction analysis and chemical analysis of the fibers show the fillowing results.

(1) at a firing temperature of 800 to 1000°C, the fibers are composed of an amorphous ternary carbide of the formula $Si_{1-x}V_xC_y$ ($0.25 \geqq x \geqq 0.001$, $1.50 \geqq y \geqq 1.00$) without any clean crystal grain boundary.

(2) At a firing temperature of 1300 to 1800°C, the fibers are composed of a crystal aggregate consisting of β-SiC substantially as a main component and vanadium carbide and graphite, the proportion of vanadium and graphite not exceeding 0.25 mole and 0.50 mole respectively per mole of β-BiC, these crystalline compounds being in the form of ultrafine particles having a crystal grain size of not more than 50 nm (500 Å) and being entangled to form an intimate aggregate.

$V_4C_3$ (1—1159), $V_2C$ (19—1393), $VC_{0.88}$ (23—1468), $V_4C_{2.67}$ (24—1390), and $V_3C_7$ (25—1002) (the parenthesized figures are ASTM X-ray Card Number) are known as vanadium carbide. In the present invention, $V_2C$ was mainly determined.

(3) At a firing temperature of 1000 to 1300°C, the fibers are composed of a mixture of the amorphous ternary carbide (1) and the aggregate of crystalline particles (2).

As the firing temperature in the above process is made higher beyond 1500°C, the continuous inorganic fibers of the invention gradually decrease in strength as a result of the increase of the average crystal grain size in the fibers.

The very high strength of the continuous inorganic fibers of the invention is due presumably to the fact that the fibers are composed of the amorphous carbide or ultrafine crystalline particles. The fibers of the invention have resistance to deformation since localized stresses are dispersed through crystal grain boundaries with a high density. Furthermore, since the crystals are ultrafine particles, there is no room for the presence of transition required for deformation in the crystal grains. Because the crystal grain size is very small, the apparent surface tension of the particles becomes exceedingly high, thus providing resistance to deformation. Furthermore, because the surface of the fibers is smooth, there is no decrease in strength due to the concentration of stresses in raised or depressed portions.

It has been found by observation with a transmission-type electron microscope that when the firing temperature is 1000 to 1500°C, fine particles of β-SiC, vanadium carbide and graphite constituting the continuous inorganic fibers obtained by the present invention are of a layer structure and in the form of elongated flattened fibers which are entangled with each other to form a composite. At these firing temperatures, the continuous inorganic fibers are composed of an aggregate of microscopic fibrous structures, and therefore, they have excellent mechanical and thermal properties suitable for actual application. Specifically, the continuous fibers of the invention have a tensile strength of 200 to 600 $kg/mm^2$, a modulus of elasticity of $15 \times 10^{-4}$ to $40 \times 10^4$ $N/mm^2$ (15 to 40 $tons/mm^2$), and a specific gravity of 2.0/3.0, and can withstand use at a temperature of up to 1500°C.

Figures 3 and 4 show the results of X-ray powder diffraction of powders obtained by pulverizing in an agate-mortar fibers obtained by firing at 1350°C by the process of this invention. The fibers shown in Figures 3 and 4 were obtained by firing at 1350°C for 2 hours in argon.

The fibers shown in Figure 3 have a V concentration of 8% by weight after firing, and are determined to contain β-SiC, graphite and $V_2C$. The fibers shown in Figure 4 have a V concentration of 0.05% by weight after firing, and apparently have a β-SiC phase and a graphite phase. It is impossible however to determine whether V is dispersed as $V_2C$, or taken in the lattice of β-SiC. However, even the concentration of V is low, the mechanical and thermal properties of the resulting fibers are satisfactory.

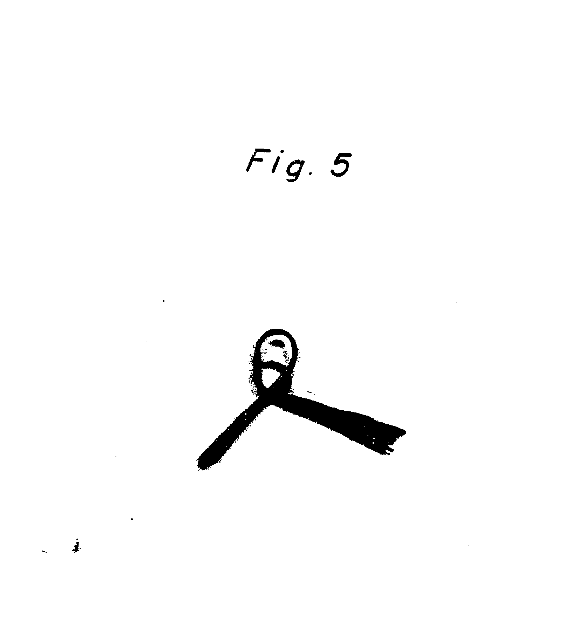

The continuous inorganic fibers of the invention do not break and are generally obtained as an infinite length. The photograph of a bundle of fibers cut to a length of 80 cm is shown in Figure 5. The fibers shown in Figure 5 are a bundle of about 10,000 fibers having an average diameter of 20 μm and cut to a length of 80 cm which were fired at 1350°C for 2 hours in argon. It is seen from the photograph that the fibers have excellent flexibility.

The fibers can be used in the form of a woven cloth as a heat-resistant material.

The fibers of the invention have a better ability to wet metals and alloys than conventional carbon

fibers or SiC fibers, and do not excessively react with metals and alloys. Accordingly, the fibers of the invention can be used in fiber-reinforced metals, fibrous material for plastics and rubbers, fibrous heaters, fire-retardant woven cloths, and acid-resistant diaphragms. They can also be used as reinforcing fibers in atomic reactor materials, structural materials for aircraft, bridge and structural materials, nuclear fusion reactors, rockets, illuminators, polishing cloths, wire ropes, marine exploiting materials, golf shaft materials, skiing stocks, tennis rackets, fishing tackles and shoe soles.

The following Examples illustrate the present invention more specifically.

Example 1

Twenty grams of $\alpha,\omega$-dihydroxypolydimethylsiloxane having an average degree of polymerization of 500 was mixed with 40 ml of a solution of 25 g of $VCl_4$ in 500 ml of tetrahydrofuran.

A beaker containing the resulting mixture was heated over a hot plate at 190°C and when the mixture became highly viscous, the heating was stopped. The product was hot-filtered, and tetrahydrofuran was added to the filtrate to adjust the amount of the mixture to 100 ml.

Twenty grams of polydimethylsilane of the formula

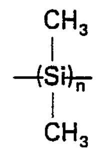

(n = 35) was weighed into a 200 ml eggplant-shaped flask, and 100 ml of the above tetrahydrofuran solution was added. They were mixed with stirring in an atmosphere of nitrogen, and then heated up to 200°C from room temperature to evaporate the tetrahydrofuran.

A reactor of the type shown in Figure 1 was used, and its bottom was kept at 400°C in a stream of nitrogen. The reactant mixture was reacted at 400°C for 5 hours by heating it in an electric furnace.

After the reaction, xylene was added to the contents to dissolve the reaction mixture. The solution was filtered at atmospheric pressure. The filtration product was transferred to a 200 ml roundbottomed separable flask and a Liebig condenser was attached to the flask to provide a distillation device. With stirring, nitrogen gas was passed through the flask, and the flask was heated from room temperature by a mantle heater. As a result of heating, xylene first distilled at 140°C which is the boiling point of xylene. Then, the temperature was raised slowly at a rate of 10°C/10 minutes up to 320°C to remove a low-molecular-weight organometallic polymer.

The foregoing procedure yielded 12 g of a modified polycarbosilane.

The modified polycarbosilane was melted at 320°C in a spinning apparatus, and melt spun at a spinning speed of 500 m/min. through a spinneret (300 $\mu$m) to obtain fibers having a diameter of 15 micrometres. The fibers were heated for 6 hours from room temperature to 190°C in the air under no tension, and maintained at 190°C for 0.5 hour to render them infusible. The infusible fibers were heated at a rate of 100°C/hour in a stream of nitrogen (50 cc/min.) under no tension, and the temperature was raised to 800, 1300, and 1450°C, respectively. At each of these temperatures, the heated fibers were maintained for 1 hour, and then cooled to give continuous inorganic fibers.

The properties of these fibers (diameter about 14 micrometers) obtained under these three different firing conditions are shown in Table 2.

TABLE 2

| Firing temperature (°C) | Crystalline phase | Tensile strength ($kg/mm^2$) | Modulus of elasticity ($ton/mm^2$) ($N/mm^2 \times 10^{-4}$) |
|---|---|---|---|
| 800 | Amorphous | 300 | 22 |
| 1300 | Amorphous + $\beta$-SiC + $V_2C$ + graphite | 320 | 28 |
| 1450 | $\beta$-SiC + $V_2C$ + graphite | 310 | 24 |

Example 2

Forty grams of the polydimethylsilane shown in Example 1 was mixed with 15 ml of $VCl_4$.(THF) complex obtained by dissolving 25 g of $VCl_4$ in 500 ml of tetrahydrofuran in a 100 ml eggplant-shaped flask (THF stands for tetrahydrofuran).

The eggplant-shaped flask was fixed to a rotary evaporator, and the tetrahydrofuran was evaporated at a bath temperature of 60°C and under a pressure of 66.5 mbar (50 mmHg) induced by a water flow pump. The residue was worked up in the same way as in Example 1 to synthesize an organometallic polymer which was then filtered and concentrated to give 26 g of a modified polycarbosilane.

The modified polycarbosilane was melted at 300°C and melt-spun in the air at a spinning speed of 650 m/min. from a spinneret (300 $\mu$m) to give fibers having a diameter of 14 micrometres. The fibers were heated in the air over 3 hours from room temperature to 190°C while applying a tension of 50 g/mm$^2$, and maintained at 190°C for 0.5 hour to make them infusible. The infusible fibers were heated to 1200°C over 12 hours in vacuum $3.9 \times 10^{-3}$ mbar ($3 \times 10^{-3}$ mmHg) under no tension, and fired at 1300°C for 1 hour. The resulting fibers had a diameter of about 12 micrometres, a tensile strength of 300 kg/mm$^2$ and a modulus of elasticisty of $26 \times 10^4$ n/mm$^2$ (26 tons/mm$^2$).

Example 3

Fifty grams of polysilane having a side-chain consisting of methyl groups and phenyl groups in a ratio of 70:30 was mixed with a solution of 6.5 g of vanadyl sulfate ($VOSO_4$) in 100 cc of acetylacetone. They were well mixed, and the acetyl acetone was evaporated by distillation. The dried powder was put into a reactor of the type shown in Figure 1, and polymerized for 8 hours in an argon stream by heating the bottom portion of the reactor to 500°C.

The polymer was dissolved in tetrahydrofuran, and filtered, followed by evaporation of the tetrahydrofuran in a stream of nitrogen. The product was then concentrated at 350°C for 1 hour to give a modified polycarbosilane.

The modified polycarbosilane was spun, rendered infusible, and fired under the same conditions as in Example 1 to give continuous inorganic fibers which had an average diameter of 10 micrometers, a tensile strength of 308 kg/mm$^2$ and a modulus of elasticity of $30 \times 10^4$ N/mm$^2$ (30 tons/mm$^2$).

## Claims

1. A process for producing continuous inorganic fibers, which comprises

(1) a first step of forming a modified polycarbosilane,

(2) a second step of preparing a spinning dope of the modified polycarbosilane and spinning it;

(3) a third step of rendering the resulting fibers infusible under tension or in the absence of tension; and

(4) a fourth step of firing the infusible fibers at a temperature of 800 to 1800°C in vacuum or in an atmosphere of an inert gas, characterized in that in the first step the modified polysilane is prepared by mixing a polysilane of the formula

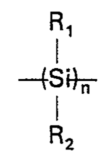

wherein $R_1$ and $R_2$ are identical and each represents a group selected from the class consisting of hydrogen, methyl, ethyl and phenyl provided that $R_1$ and $R_2$ are not hydrogen at the same time, and n is a number represented by $3 \leqq n < 500$,
with polyvanadiosiloxane or a vanadium complex having oxygen as a coordinating atom adjacent to the vanadium atom and reacting the mixture at 250 to 500°C in an atmosphere inert to the reaction, said modified polycarbosilane being an organometallic polymer of which main-chain skeleton consists mainly of an Si—$CH_2$ bond and a V—O bond and which partly contains a vanadiosiloxane bond V—O—Si, the ratio of the silicon atoms to the vanadium atoms being in the range of from 3:1 to 1000:1, the silicon atom having directly bonded thereto a side-chain group selected from the class consisting of hydrogen, methyl, ethyl and phenyl, the vanadium atom being bonded to the silicon atom through an oxygen atom, and said polymer being substantially free from a side-chain organic group directly bonded to the vanadium atom.

2. The process of claim 1 wherein the spinning dope is prepared in the second step by melting the polycarbosilane obtained in the first step.

3. The process of claim 1 wherein the spinning dope in the second step is prepared in the second step by dissolving the polycarbosilane obtained in the first step in a solvent.

4. The process of claim 1 wherein the fibers are rendered infusible in the third step by heating the spun fibers obtained in the second step at a low temperature in an oxidizing atmosphere.

5. The process of claim 1 wherein the fibers are rendered infusible in the third step by exposing

the spun fibers obtained in the second step to $\gamma$-ray irradiation or electron beam irradiation in an oxidizing or nonoxidizing atmosphere.

6. The process of claim 1 wherein after the first step and before the second step, low-molecular-weight compounds are extracted with a solvent from the polycarbosilane formed in the first step to reduce the content of the low-molecular-weight compounds.

7. The process of claim 1 wherein after the first step and before the second step, the polycarbosilane formed in the first step is heated under reduced pressure or in an inert gaseous atmosphere to remove part of low-molecular-weight compounds in the polycarbosilane, thereby reducing the content of the low-molecular-weight compounds.

8. The process of claim 1 wherein after the fourth step, the fired fibers were treated with an acid or alkali, and/or heated at 800 to 1600°C in an oxidizing atmosphere, thereby removing impurities from the fired fibers.

9. Continuous inorganic fibers consisting substantially of Si, V and C (which may contain O as an impurity), said fibers being composed substantially of

(1) an amorphous ternary carbide of the formula $Si_{1-x}V_xC_y$ in which $0.25 \geqq x \geqq 0.001$ and $1.50 \geqq y \geqq 1.00$, or

(2) a crystal aggregate consisting of $\beta$-SiC substantially as a main component and vanadium carbide and graphite, the proportions of vanadium and graphite not exceeding 0.25 mole and 0.50 mole respectively per mole of $\beta$-SiC, these crystalline compounds being in the form of ultrafine particles having a crystal grain size of not more than 50 nm (500 Å) and being entangled to form an intimate composite, or

(3) a mixture of the amorphous ternary carbide (1) and the crystal aggregate (2).

## Patentansprüche

1. Verfahren zur Herstellung von kontinuierlichen anorganischen Fasern mit

(1) einem ersten Schritt, in dem ein modifiziertes Polycarbosilan gebildet wird,

(2) einem zweiten Schritt, in dem aus dem modifizierten Polycarbosilan eine Spinnflüssigkeit hergestellt und versponnen wird,

(3) einem dritten Schritt, in dem die erhaltenen Fasern unter Zugspannung oder in Abwesenheit von Zugspannung unschmelzbar gemacht werden, und

(4) einem vierten Schritt, in dem die unschmelzbaren Fasern bei einer Temperatur von 800 bis 1800°C im Vakuum oder in einer Inertgasatmosphäre gebrannt werden, dadurch gekennzeichnet, daß das modifizierte Polycarbosilan in dem ersten Schritt hergestellt wird, indem man ein Polysilan der Formel

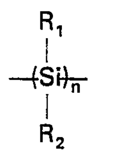

worin $R_1$ und $R_2$ identisch oder verschieden sind und jeweils eine Gruppe bedeuten, die aus Wasserstoff, Methyl, Ethyl und Phenyl ausgewählt ist, wobei vorausgesetzt ist, daß $R_1$ und $R_2$ nicht gleichzeitig Wasserstoff bedeuten, und n eine Zahl ist, für die gilt, daß $3 \leqq n < 500$,
mit Polyvanadiosiloxan oder einem Vanadiumkomplex mit Sauerstoff als koordinativ gebundenem, dem Vanadiumatom benachbartem Atom vermischt und die Mischung bei 250 bis 500°C in einer für die Reaktion inerten Atmosphäre zur Reaktion bringt, wobei das modifizierte Polycarbosilan ein metallorganisches Polymer ist, dessen Hauptkettengerüst hauptsächlich aus Si—$CH_2$—Bindungen und V—O—Bindungen besteht und das einen Anteil von Vanadiosiloxanbindungen V—O—Si enthält, das Verhältnis der Siliciumatome zu den Vanadiumatomen in dem Bereich von 3:1 bis 1000:1 liegt, an die Siliciumatome Seitenkettengruppen, die aus Wasserstoff, Methyl, Ethyl und Phenyl ausgewählt sind, direkt gebunden sind, die Vanadiumatome jeweils durch ein Sauerstoffatom an ein Siliciumatom gebunden sind und das Polymer im wesentlichen frei von direkt an die Vanadiumatome gebundenen organischen Seitenkettengruppen ist.

2. Verfahren nach Anspruch 1, bei dem die Spinnflüssigkeit in dem zweiten Schritt durch Schmelzen des in dem ersten Schritt erhaltenen Polycarbosilans hergestellt wird.

3. Verfahren nach Anspruch 1, bei dem die Spinnflüssigkeit in dem zweiten Schritt durch Auflösen des in dem ersten Schritt erhaltenen Polycarbosilans in einem Lösungsmittel hergestellt wird.

4. Verfahren nach Anspruch 1, bei dem die Fasern in dem dritten Schritt unschmelzbar gemacht werden, indem die in dem zweiten Schritt erhaltenen Spinnfasern bei einer niedrigen Temperatur in einer oxidierenden Atmosphäre erwärmt werden.

5. Verfahren nach Anspruch 1, bei dem die Fasern in dem dritten Schritt unschmelzbar gemacht werden, indem die in dem zweiten Schritt erhaltenen Spinnfasern in einer oxidierenden oder einer

nichtoxidierenden Atmosphäre einer Bestrahlung mit $\gamma$-Strahlen oder Elektronenstrahlen ausgesetzt werden.

6. Verfahren nach Anspruch 1, bei dem aus dem Polycarbosilan, das in dem ersten Schritt gebildet wurde, nach dem ersten Schritt und vor dem zweiten Schritt niedermolekulare Verbindungen mit einem Lösungsmittel extrahiert werden, um den Gehalt der niedermolekularen Verbindungen zu vermindern.

7. Verfahren nach Anspruch 1, bei dem das in dem ersten Schritt gebildete Polycarbosilan nach dem ersten Schritt und vor dem zweiten Schritt unter vermindertem Druck oder in einer Inertgasatmosphäre erwärmt wird, um einen Teil der niedermolekularen Verbindungen in dem Polycarbosilan zu entfernen, wodurch der Gehalt der niedermolekularen Verbindungen vermindert wird.

8. Verfahren nach Anspruch 1, bei dem die gebrannten Fasern nach dem vierten Schritt mit einer Säure oder Alkali behandelt und/oder in einer oxidierenden Atmosphäre bei 800 bis 1600°C erwärmt werden, wodurch aus den gebrannten Fasern Verunreinigungen entfernt werden.

9. Kontinuierliche anorganische Fasern, die im wesentlichen aus Si, V und C bestehen (und die O als Verunreinigung enthalten können), wobei die Fasern im wesentlichen aus

(1) einem amorphen ternären Carbid der Formel $Si_{1-x}V_xC_y$, worin $0{,}25 \geqq x \geqq 0{,}001$ und $1{,}50 \geqq y \geqq 1{,}00$, oder

(2) einem Kristallaggregat, das aus $\beta$-SiC im wesentlichen als Hauptbestandteil und Vanadiumcarbid und Graphit besteht, wobei die Anteile von Vanadium und Graphit 0,25 mol bzw. 0,50 mol pro Mol $\beta$-SiC nicht überschreiten und diese kristallinen Verbindungen in Form von ultrafeinen Teilchen mit einer Kristallkorngröße von nicht mehr als 50 nm vorliegen und unter Bildung einer innigen Mischung verwachsen bzw. verwickelt sind, oder

(3) einer Mischung des amorphen ternären Carbids (1) und des Kristallaggregats (2) bestehen.

**Revendications**

1. Procédé pour produire des fibres inorganiques continues, qui comprend:

(1) une première étape pour former un polycarbosilane modifié,

(2) une seconde étape pour préparer une masse propre au filage du polycarbosilane modifié et le filer,

(3) une troisième étape pour rendre les fibres résultantes non fusibles sous tension ou en l'absence de tension, et

(4) une quatrième étape d'un traitement thermique des fibres non fusibles à une température comprise entre 800 et 1800°C sous vide ou dans une atmosphère d'un gaz inerte, caractérisé en ce que le polysilane modifié est préparé au cours de la première étape en mélangeant un polysilane de formule

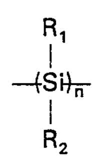

où $R_1$ et $R_2$ identiques ou différents et représentent chacun un groupe choisi dans la classe consistant en hydrogène, méthyle, éthyle et phényle, à condition que $R_1$ et $R_2$ ne soit pas de l'hydrogène en même temps, et que n soit un nombre représenté par $3 \leqq n < 500$

avec du polyvanadiosilane ou un composé de vanadium contenant de l'oxygène comme atome de coordination adjacent à l'atome de vanadium et en faisant réagir le mélange entre 250 et 500°C dans une atmosphère inerte à la réaction, ledit polycarbosilane modifié étant un polymère organométallique dont la charpente formant la chaîne principale consiste principalement en une liaison Si—$CH_2$ et une liaison V—O, et qui contient en partie une liaison de vanadiosiloxane V—O—Si, le rapport entre les atomes de silicium et les atomes de vanadium étant dans la plage comprise entre 3:1 et 1000:1, l'atome de silicium étant directement lié à un groupe à chaîne latérale choisi dans la classe consistant en hydrogène, méthyle, éthyle et phényle, et l'atome de vanadium étant lié à l'atome de silicium par l'intermédiaire d'un atome d'oxygène, et ledit polymère étant sensiblement exempt d'un groupe organique en chaîne latérale liée directement à l'atome de vanadium.

2. Procédé selon la revendication 1, caractérisé en ce que la masse fondue propre au filage est préparée au cours de la seconde étape en faisant fondre le polycarbosilane obtenu au cours de la première étape.

3. Procédé selon la revendication 1, caractérisé en ce que la masse propre au filage obtenue au cours de la seconde étape est préparée au cours de cette seconde étape en dissolvant le polycarbosilane obtenu au cours de la première étape dans un solvant.

4. Procédé selon la revendication 1, caractérisé en ce que les fibres sont rendues non fusibles au cours de la troisième étape en chauffant les fibres filées obtenues au cours de la seconde étape à une basse température dans une atmosphère oxydante.

5. Procédé selon la revendication 1, caractérisé en ce que les fibres sont rendues non fusibles au cours de la troisième étape en exposant les fibres filées obtenues au cours de la seconde étape à une irradiation par les rayons $\gamma$ ou par une irradiation par un faisceau d'électrons dans une atmosphère oxydante ou non oxydante.

6. Procédé selon la revendication 1, caractérisé en ce qu'après la première étape et avant la seconde étape on extrait les composés de faible poids moléculaire du polycarbosilane formé au cours de la première étape au moyen d'un solvant, pour réduire la teneur en composés de faible poids moléculaire.

7. Procédé selon la revendication 1, caractérisé en ce qu'après la première étape et avant la seconde étape, le polycarbosilane formé au cours de la première étape est chauffé sous une pression réduite ou dans une atmosphère gazeuse inerte pour éliminer une partie des composés de faible poids moléculaire contenus dans le polycarbosilane, en réduisant ainsi la teneur en composés de faible poids moléculaire.

8. Procédé selon la revendication 1, caractérisé en ce qu'après la quatrième étape, les fibres ayant subi un traitement thermique sont traitées avec un acide ou un alcali, et/ou chauffées entre 800 et 1600°C dans une atmosphère oxydante, pour éliminer ainsi les impuretés des fibres ayant subi le traitement thermique.

9. Fibres inorganiques continues consistant essentiellement en Si, V et C (qui peut contenir O en tant qu'impureté), lesdites fibres étant composées essentiellement de

(1) un carbure ternaire amorphe de formule $Si_{1-x}V_xC_y$ dans lequel $0,25 \geqq x \geqq 0,001$ et $1,50 \geqq y \geqq 1,00$, ou

(2) un agrégat de cristaux consistant essentiellement en $\beta$-SiC en tant que composant principal et en carbure de vanadium ainsi qu'en graphite, les proportions du vanadium et du graphite ne dépassant pas 0,25 moles et 0,55 moles respectivement par mole de $\beta$-SiC, ces composés cristallins étant sous la forme de particules ultra-fines ayant une dimension des grains des cristaux ne dépassant pas 50 nm (500 Å) et étant emmêlés de façon à former un composé intime, ou

(3) un mélange du carbure ternaire amorphe (1) et de l'agrégat de cristaux (2).

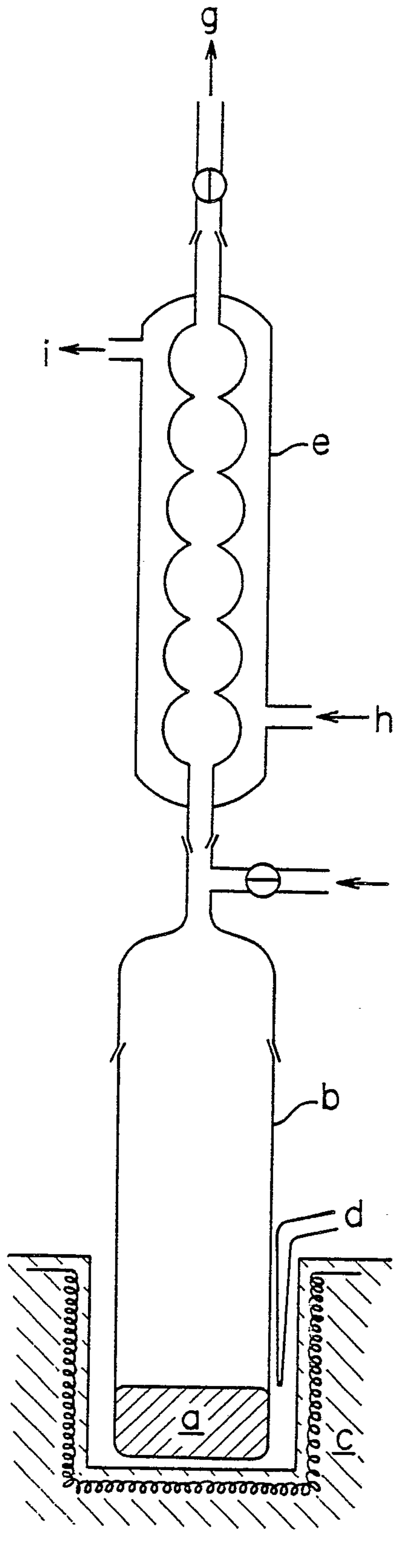


Fig. 1

Fig. 2

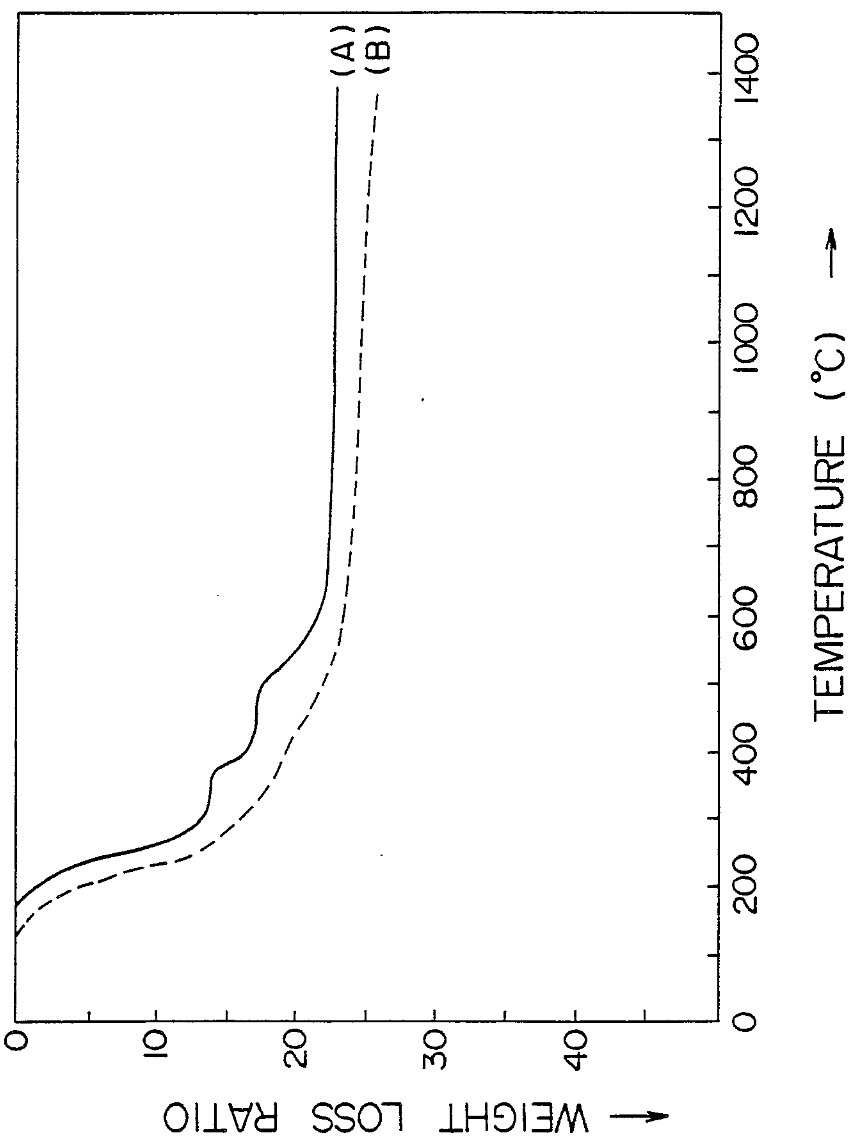
WEIGHT LOSS RATIO →
0
10
20
30
40
TEMPERATURE (°C) →
0
200
400
600
800
1000
1200
1400
(A)
(B)

Fig. 3

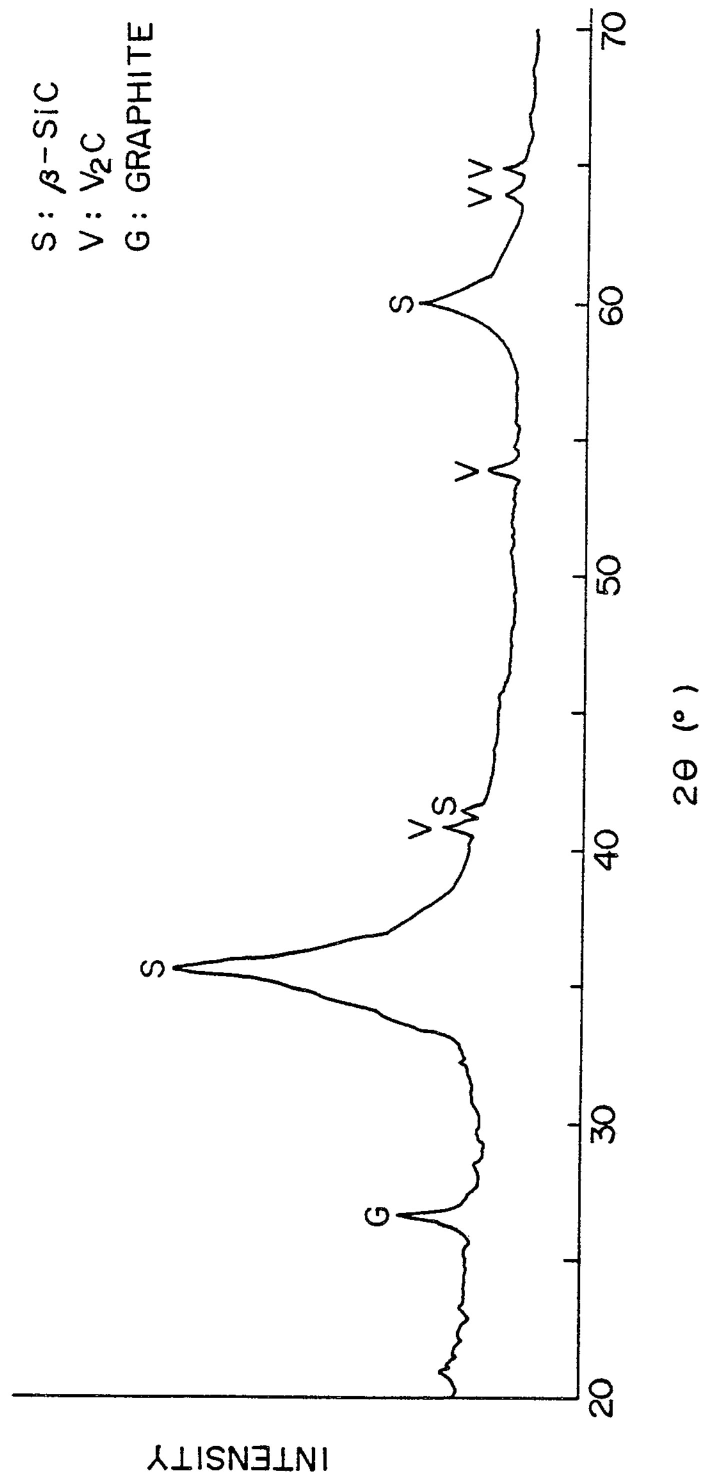

*Fig. 4*

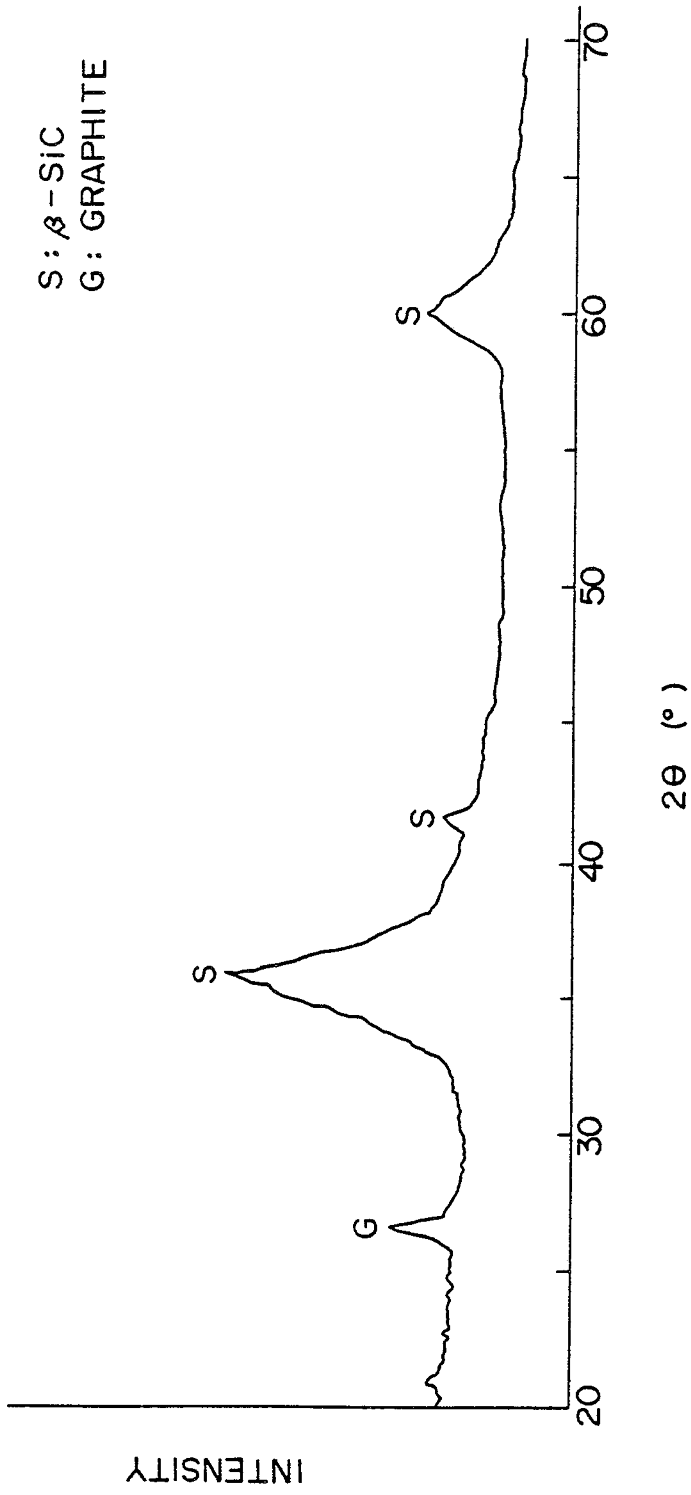

Fig. 5